# EUROPÄISCHE PATENTSCHRIFT

(11) **EP 2 163 342 B1**
(45) Veröffentlichungstag und Bekanntmachung des Hinweises auf die Patenterteilung: **07.12.2011**
(21) Anmeldenummer: 09168863.0
(22) Anmeldetag: 27.08.2009
(51) Int. Cl.: B23Q 17/00, B23Q 17/24

(54) **Vorrichtung und Verfahren zur Überwachung**
Method and device for monitoring
Dispositif et procédé de surveillance

(30) Priorität: 10.09.2008 DE 102008046621
(43) Veröffentlichungstag der Anmeldung: 17.03.2010
(73) Patentinhaber: Andreas Maier GmbH & Co. KG, 70734 Fellbach (DE)
(72) Erfinder: Göbel, Volker, 70563 Stuttgart (DE)
(74) Vertreter: Hoeger, Stellrecht & Partner Patentanwälte

(56) Entgegenhaltungen:
- EP-A- 0 320 436
- US-A1- 2002 002 885
- US-B1- 7 423 734

## Beschreibung

Die vorliegende Erfindung betrifft eine Überwachungsvorrichtung zur Überwachung der Art, der Position und/oder der Orientierung
- a): mindestens eines Werkstücks, welches mittels mindestens einer Spann- vorrichtung an einer Werkstückbearbeitungsvorrichtung oder an min- destens einer Werkstückaufnahmevorrichtung eingespannt ist,
- b): mindestens einer Werkstückaufnahmevorrichtung, an der das min- destens eine Werkstück gehalten ist, und/oder
- c): mindestens einer Spannvorrichtung zum Einspannen mindestens eines Werkstücks an einer Werkstückbearbeitungsvorrichtung oder an min- destens einer Werkstückaufnahmevorrichtung.

Solche Überwachungsvorrichtungen, insbesondere zur Automatisierung in der Werkstückspanntechnik, sind aus dem Stand der Technik bekannt.

Die Überwachung erfolgt bei den bekannten Überwachungsvorrichtungen mittels Sperrluft oder elektronischer Sensoren, wobei eine umfangreiche Überwachung komplexer Systeme stets eine Vielzahl von Sensoren erfordert, die für jeden Betriebsmodus des zu überwachenden Systems aufwendig justiert werden müssen.

Die US 7,423,734 B1 und die US 2002/0002885 A1 offenbaren eine Vorrichtung zur Beobachtung von Maschinenteilen mittels einer Kamera, wobei ein von der Kamera erzeugtes Bild an einem Bildschirm dargestellt und mit Visualisierungshilfen überlagert wird.

Die EP 0 320 436 A2 offenbart eine Vorrichtung und ein Verfahren zur Fernsteuerung eines Werkzeugs, wobei mittels einer Kamera ein Werkzeugträger und ein daran angeordnetes Werkzeug beobachtet werden können.

Die US 5,956,253 A offenbart eine Vorrichtung zum Einrichten einer CNC-Maschine, welche eine Kamera umfasst, die nach dem Einrichten von der CNC-Maschine entfernt wird.

Der vorliegenden Erfindung liegt die Aufgabe zugrunde, eine Überwachungsvorrichtung der eingangs genannten Art zu schaffen, welche eine einfache und flexible Überwachung auch komplexer Systeme ermöglicht.

Diese Aufgabe wird durch eine Überwachungsvorrichtung nach Anspruch 1 gelöst.

Die erfindungsgemäße Lösung bietet den Vorteil, dass die Bilderzeugungsvorrichtung mittels der Werkstückbearbeitungsvorrichtung motorisch verfahrbar ist. Dadurch ist keine separate Bewegungseinrichtung zum Verfahren der Bilderzeugungsvorrichtung notwendig.

Mittels der erfindungsgemäßen Überwachungsvorrichtung sind Objekte hinsichtlich ihrer Art, ihrer Position und/oder ihrer Orientierung überwachbar.

Unter einer "Überwachung der Art" (Identifikation) ist in dieser Beschreibung und in den beigefügten Ansprüchen zu verstehen, dass unterschiedliche Gruppen von überwachten Objekten mittels der Überwachungsvorrichtung unterscheidbar sind. Insbesondere ist ermittelbar, ob der Typ des beispielsweise an der Werkstückaufnahmevorrichtung gehaltenen Werkstücks demjenigen entspricht, welcher zur Bearbeitung mittels der Werkstückbearbeitungsvorrichtung vorgesehen ist.

Unter einer "Überwachung der Position" ist in dieser Beschreibung und in den beigefügten Ansprüchen zu verstehen, dass die Abweichung einer Istposition eines überwachten Objekts von seiner Sollposition, insbesondere von der in einem Sollbild oder in einem CAD-Modell vorgegebenen Sollposition, ermittelbar ist.

Eine "Istposition" ist dabei die Position, in der sich ein Objekt zum Zeitpunkt einer Erzeugung eines Bildes dieses Objekts befindet, das heißt, dass der Begriff "Istposition" die mittels einer Bilderzeugungsvorrichtung in einem Bild festgehaltene Position eines Objekts bezeichnet.

Der Begriff "Sollposition" bezieht sich dagegen auf die gewünschte Position des Objekts, in der es sich im jeweiligen Fall befinden soll. Insbesondere ist unter einer "Sollposition" eine Referenzposition zu verstehen, das heißt eine Position, in der ein als Referenz definiertes Objekt bei ordnungsgemäßer Durchführung vordefinierter Schritte aufzufinden sein soll.

Bei einer Ausgestaltung der Erfindung ist vorgesehen, dass eine mittels einer Bildauswertungsvorrichtung durchgeführte Auswertung unter Verwendung mindestens eines Toleranzwertes erfolgt, wobei innerhalb des vorgegebenen mindestens einen Toleranzwerts eine Abweichung der Istposition des überwachten Objekts von seiner Sollposition noch immer als Übereinstimmung der Istposition mit der Sollposition gewertet werden kann. Derartige Toleranzwerte tragen der Tatsache Rechnung, dass in realen Systemen oft detektierbare Abweichungen auftreten. Da es wünschenswert sein kann, kleinere Abweichungen zu tolerieren, stellt die Verwendung eines Toleranzwertes ein adäquates Mittel zur Vermeidung zu hoher Prozessabbruchquoten unter gleichzeitiger Einhaltung der gewünschten Qualitätskriterien dar.

Nach einer Weiterbildung der Erfindung ist vorgesehen, dass die Absolutkoordinaten mindestens eines überwachten Objekts bezüglich eines vorgegebenen Koordinatensystems ermittelbar sind.

Unter einer "Überwachung der Orientierung" ist in dieser Beschreibung und in den beigefügten Ansprüchen die Überwachung der räumlichen Ausrichtung des überwachten Objekts, insbesondere bezüglich einer Drehachse, zu verstehen.

Vorzugsweise ist mittels der Überwachungsvorrichtung folglich ermittelbar, ob ein überwachtes Objekt bezüglich seiner Sollausrichtung gedreht, insbesondere um 180° um eine vertikale Achse gedreht, angeordnet ist.

Bei einer bevorzugten Ausgestaltung der Erfindung sind die Merkmale Art, Position und Orientierung eines überwachten Objekts nicht nur zusammen, sondern auch einzeln, insbesondere jedoch in beliebiger Kombination miteinander, überwachbar.

Vorzugsweise sind ferner unterschiedliche Objekte, insbesondere gleichzeitig, bezüglich unterschiedlicher Merkmale überwachbar. Beispielsweise kann vorgesehen sein, eine Werkstückaufnahmevorrichtung auf deren Position und gleichzeitig ein an der Werkstückaufnahmevorrichtung angeordnetes Werkstück auf dessen Art und/oder dessen Orientierung zu überwachen.

Bei einer vorteilhaften Ausführungsform der Erfindung ist mittels der Bilderzeugungsvorrichtung mindestens ein Sollbild erzeugbar, welches ein Werkstück, eine Werkstückaufnahmevorrichtung und/oder eine Spannvorrichtung zeigt. Damit kann auf einfache Art und Weise eine Referenz für die zu überwachenden Objekte festgelegt werden.

Günstig ist es, wenn mindestens ein Sollbild erzeugbar ist, welches ein Werkstück, eine Werkstückaufnahmevorrichtung und eine Spannvorrichtung, umfassend mehrere, beispielsweise vier, Spannelemente, zeigt.

Besonders günstig ist es, wenn mindestens ein Sollbild mindestens ein zumindest teilweise abgebildetes Objekt in seiner Sollart, Sollposition und/oder Sollorientierung zeigt, wobei mittels der Bildauswertungsvorrichtung eine Bildauswertung durchführbar ist, bei der mindestens ein Sollbild mit mindestens einem Istbild verglichen wird.

Bei einer Weiterbildung der Erfindung kann vorgesehen sein, dass mindestens eine mittels der Bildauswertungsvorrichtung durchgeführte Bildauswertung auf einem Vergleich der Kontrast- und/oder Helligkeitswerte des mindestens einen Istbildes mit denjenigen des entsprechenden Sollbildes beruht.

Vorzugsweise ist eine Abweichung der Istposition mindestens eines Teils der Werkstückbearbeitungsvorrichtung von der entsprechenden Sollposition bereits dann detektierbar, wenn dieser mindestens eine Teil von der Bilderzeugungsvorrichtung zumindest teilweise erfasst wird.

Bei einer Ausgestaltung der Erfindung ist eine Verbindung der Überwachungsvorrichtung mit einer die zu überwachenden Objekte bearbeitenden oder umfassenden Werkstückbearbeitungsvorrichtung vorgesehen. Damit kann auf die Werkstückbearbeitungsvorrichtung, in Abhängigkeit von einer mittels der Bildauswertungsvorrichtung durchgeführten Auswertung, automatisch Einfluss genommen werden. Insbesondere kann die Werkstückbearbeitungsvorrichtung über eine Schnittstelle zur Übertragung von Signalen in Abhängigkeit von einem Ausgangssignal der Bildauswertungsvorrichtung von einer Maschinensteuerungsvorrichtung angesteuert werden.

Ferner ist erfindungsgemäß vorgesehen, dass, basierend auf dem Ausgangssignal der Bildauswertungsvorrichtung, mindestens eine Funktion der Werkstückbearbeitungsvorrichtung freischaltbar oder sperrbar ist.

Vorteilhaft ist es, wenn eine freischaltbare Funktion die Bearbeitung des Werkstücks ist.

Vorzugsweise benötigen die Bilderzeugung und die Bildauswertung des erzeugten Bildes höchstens eine Sekunde.

Bei einer Ausgestaltung der Erfindung ist vorgesehen, dass die Bilderzeugungsvorrichtung statt eines Werkzeugs an einer Werkzeugaufnahme des Bearbeitungskopfs der Werkstückbearbeitungsvorrichtung anordenbar ist. Dadurch ist keine separate Halterung für die Bilderzeugungsvorrichtung an der Werkstückbearbeitungsvorrichtung notwendig. Ferner kann dadurch mittels der Bilderzeugungsvorrichtung derjenige Bereich erfasst werden, welcher mittels eines an dem Bearbeitungskopf anordenbaren Werkzeugs bearbeitet werden soll und/oder bereits bearbeitet worden ist.

Alternativ oder ergänzend hierzu kann vorgesehen sein, dass die Bilderzeugungsvorrichtung neben einer Werkzeugaufnahme des Bearbeitungskopfs der Werkstückbearbeitungsvorrichtung anordenbar ist. Auf diese Weise ist insbesondere auch während einer Bearbeitung eines Werkstücks mittels eines an dem Bearbeitungskopf der Werkstücksbearbeitungsvorrichtung angeordneten Werkzeugs eine Überwachung, insbesondere des Werkzeugs und/oder des Werkstücks, mittels der Bilderzeugungsvorrichtung möglich.

Bei einer Ausgestaltung der Erfindung ist innerhalb einer Maschinenspindel des Bearbeitungskopfes eine Kabeldurchführung für Datenkabel zur Übertragung von Messdaten von der Bilderzeugungsvorrichtung zur Bildauswertungsvorrichtung und/oder für Stromkabel zur Energieversorgung der Bilderzeugungsvorrichtung vorgesehen.

Vorteilhaft ist es, wenn die Bilderzeugungsvorrichtung eine Sendeeinheit zum Senden von Signalen umfasst.

Ferner ist es vorteilhaft, wenn die Überwachungsvorrichtung eine Empfangseinheit zum Empfangen der von der Bilderzeugungsvorrichtung gesendeten Signale umfasst.

Bei einer Ausgestaltung der Erfindung kann vorgesehen sein, dass mindestens eine Verbindung zwischen der Sendeeinheit der Bilderzeugungsvorrichtung und der Empfangseinheit der Überwachungsvorrichtung drahtlos ausgebildet ist. Auf diese Weise ist eine besonders einfache Verbindung zwischen der Sendeeinheit und der Empfangseinheit möglich.

Günstig ist es, wenn die drahtlose Verbindung zwischen der Sendeeinheit und der Empfangseinheit als eine Wireless-LAN-Verbindung ausgebildet ist. Alternativ oder ergänzend hierzu kann vorgesehen sein, dass die Signale zwischen der Sendeeinheit der Bilderzeugungsvorrichtung und der Empfangseinheit der Überwachungsvorrichtung mittels Infrarotlicht übertragen werden.

Bei einer weiteren Ausführungsform der Erfindung ist die drahtlose Verbindung zwischen der Sendeeinheit der Bilderzeugungsvorrichtung und der Empfangseinheit der Überwachungsvorrichtung als eine Funkverbindung ausgebildet.

Vorteilhaft ist es, wenn die Bilderzeugungsvorrichtung eine Energiequelle, beispielsweise eine Batterie oder einen Akkumulator, umfasst. Insbesondere bei der Verwendung einer drahtlosen Verbindung zwischen der Sendeeinheit der Bilderzeugungsvorrichtung und der Empfangseinheit der Überwachungsvorrichtung ist dann keine drahtgebundene Verbindung zu der Bilderzeugungsvorrichtung notwendig, so dass die Bilderzeugungsvorrichtung in ihrer Bewegung nicht durch drahtgebundene Verbindungen eingeschränkt ist.

Günstig ist es, wenn die Überwachungsvorrichtung eine, beispielsweise als Ladegerät ausgebildete, Energieversorgungseinheit umfasst, mittels welcher die Energiequelle der Bilderzeugungsvorrichtung aufladbar ist.

Bei einer Ausgestaltung der Erfindung ist vorgesehen, dass die Bilderzeugungsvorrichtung motorisch verschwenkbar ist. Auf diese Weise ist mittels der Bilderzeugungsvorrichtung eine Vielzahl von verschiedenen Bereichen eines Werkstücks, einer Werkstückaufnahmevorrichtung und/oder einer Spannvorrichtung erfassbar.

Günstig ist es, wenn die Bilderzeugungsvorrichtung ein abbildendes optisches System, insbesondere ein Objektiv, umfasst.

Besonders günstig ist es, wenn ein Fokus des abbildenden optischen Systems motorisch einstellbar ist. Auf diese Weise kann eine zu erfassende Bildebene der Bilderzeugungsvorrichtung besonders einfach eingestellt werden.

Bei einer bevorzugten Ausgestaltung der Erfindung ist vorgesehen, dass das abbildende optische System einen Autofokus-Mechanismus zur automatischen Fokussierung der zu erfassenden Bildebene umfasst.

Alternativ oder ergänzend hierzu kann ein Linearschlitten vorgesehen sein, um, insbesondere fest installierte, Bilderzeugungsvorrichtungen in vorzugsweise allen Raumrichtungen bewegen zu können.

Durch die Positionierung der Bilderzeugungsvorrichtung mittels des Bearbeitungskopfes kann vorzugsweise der Fokus für die jeweilige Messaufgabe mit berücksichtigt werden.

Günstig ist es ferner, wenn die Bilderzeugungsvorrichtung einen Bildwandler, insbesondere einen CCD-Chip, umfasst.

Vorteilhaft ist es, wenn der Bilderzeugungsvorrichtung eine Beleuchtungsvorrichtung zugeordnet ist. Auf diese Weise ist insbesondere ein mittels der Bilderzeugungsvorrichtung zu erfassender Bereich einfach beleuchtbar.

Alternativ oder ergänzend hierzu kann eine separate Beleuchtungsvorrichtung vorgesehen sein, die in der Werkstückbearbeitungsvorrichtung installiert ist.

Bei einer bevorzugten Ausführungsform der Erfindung ist vorgesehen, dass die Beleuchtungsvorrichtung eine Infrarotlichtquelle umfasst.

Alternativ oder ergänzend hierzu kann vorgesehen sein, dass die Beleuchtungsvorrichtung einen Laser umfasst.

Ferner kann vorgesehen sein, dass die Beleuchtungsvorrichtung mindestens eine Leuchtdiode umfasst.

Insbesondere zur Identifikation der von der Bilderzeugungsvorrichtung erfassten Objekte ist es besonders vorteilhaft, wenn mittels der Beleuchtungseinheit ein Muster, insbesondere ein linienartiges, ein streifenartiges und/oder ein gitterartiges Muster, auf einen von der Bilderzeugungsvorrichtung erfassten Bereich projizierbar ist.

Vorteilhaft ist es, wenn an dem Werkstück, an der Werkstückaufnahmevorrichtung und/oder an der Spannvorrichtung eine Detektionshilfe zur Vereinfachung einer mittels der Bildauswertungsvorrichtung durchzuführenden Auswertung eines Bildes, welches mittels der Bilderzeugungsvorrichtung von dem Werkstück, der Werkstückaufnahmevorrichtung und/oder der Spannvorrichtung erzeugt wird, angeordnet ist.

Erfindungsgemäß ist vorgesehen, dass mittels der Bilderzeugungsvorrichtung mindestens ein Sollbild erzeugbar ist, welches ein Werkstück, eine Werkstückaufnahmevorrichtung und/oder eine Spannvorrichtung in einer Sollart, Sollposition und/oder Sollorientierung zeigt.

Ferner ist erfindungsgemäß vorgesehen, dass die Überwachungsvorrichtung eine Bildauswertungsvorrichtung umfasst, mittels welcher eine Bildauswertung durchführbar ist, bei der mindestens ein Sollbild des Werkstücks, der Werkstückaufnahmevorrichtung und/oder der Spannvorrichtung mit mindestens einem Istbild verglichen wird.

Die erfindungsgemäße Überwachungsvorrichtung eignet sich insbesondere zur Verwendung in einer Werkstückbearbeitungsvorrichtung mit einem Bearbeitungskopf.

Die Werkstückbearbeitungsvorrichtung weist die vorstehend im Zusammenhang mit der erfindungsgemäßen Überwachungsvorrichtung aufgeführten Vorteile auf.

Bei einer Weiterbildung der Werkstückbearbeitungsvorrichtung ist vorgesehen, dass der Bearbeitungskopf eine Werkzeugaufnahme umfasst, an welcher wahlweise ein Werkzeug oder die Bilderzeugungsvorrichtung statt eines Werkzeugs anordenbar ist. Auf diese Weise ist die Bilderzeugungsvorrichtung besonders einfach an der Werkstückbearbeitungsvorrichtung anordenbar.

Vorteilhaft ist es, wenn die Werkstückbearbeitungsvorrichtung ein Werkzeugmagazin zur Lagerung mehrerer Werkzeuge umfasst. Insbesondere kann vorgesehen sein, dass die Bilderzeugungsvorrichtung in dem Werkzeugmagazin lagerbar ist.

Besonders vorteilhaft ist es, wenn das Werkzeugmagazin eine Energieversorgungseinheit zum Aufladen der Energiequelle der Bilderzeugungsvorrichtung umfasst.

Bei einer Ausgestaltung der Erfindung ist vorgesehen, dass die Werkstückbearbeitungsvorrichtung eine Werkzeugwechselvorrichtung umfasst, mittels welcher ein an der Werkzeugaufnahme der Werkstückbearbeitungsvorrichtung angeordnetes Werkzeug maschinell durch ein anderes Werkzeug ersetzbar ist.

Insbesondere kann dabei vorgesehen sein, dass mittels der Werkzeugwechselvorrichtung ein an der Werkzeugaufnahme angeordnetes Werkzeug zur Bearbeitung des Werkstücks maschinell durch die Bilderzeugungsvorrichtung und die an der Werkzeugaufnahme angeordnete Bilderzeugungsvorrichtung maschinell durch ein Werkzeug zur Bearbeitung des Werkstücks ersetzbar sind. Besonders vorteilhaft ist es, wenn mittels der Werkzeugwechselvorrichtung die Bilderzeugungsvorrichtung aus einem Werkzeugmagazin entnehmbar und an der Werkzeugaufnahme der Werkstückbearbeitungsvorrichtung anordenbar ist.

Vorzugsweise bietet die Überwachungsvorrichtung folgende Abfragemöglichkeiten :
- Erkennung, ob eine Werkstückaufnahmevorrichtung in die Werkstückbearbeitungsvorrichtung eingefahren ist oder nicht und ob sich diese am korrekten Platz befindet;
- Erkennung des Werkstücks, das heißt Erkennung, ob das richtige Werkstück eingelegt ist oder nicht;
- Erkennung der Lage des Werkstücks, das heißt Erkennung, ob das Werkstück richtig herum und/oder in der korrekten Position in der Vorrichtung liegt;
- Erkennung der Position des Werkstücks, das heißt Erkennung, ob das Werkstück überhaupt vorhanden ist und/oder ob es exakt an der richtigen Position liegt, so dass die Maschinenfunktion freigegeben werden kann;
- Erkennung der Position der Spannelemente, das heißt Erkennung, ob sich alle Spannelemente in gespanntem Zustand befinden.

Vorzugsweise können alle im Erkennungsfeld einer Bilderzeugungsvorrichtung befindlichen Parameter mit einem Referenzbild verglichen werden. Nach einer besonders vorteilhaften Ausgestaltung der Erfindung wertet eine Software dabei verschiedene Bereiche des Bildausschnittes aus und bietet ein Signal für jede einzelne. Funktion.

Alternativ oder ergänzend hierzu kann eine Messung mit einem 3D-Sensor vorgesehen sein. Dieser besteht aus einer Streifenprojektion und einer hochauflösenden CCD-Kamera. Auf der Vorrichtung befinden sich Referenzpunkte, mit denen der Sensor seine Messdaten in ein globales Koordinatensystem einbinden kann.

Vorzugsweise ermöglicht eine einfache Referenz mit einem Vergleich zwischen einem Sollbild und einem Istbild eine Fehlererkennung ab einer Abweichung von 0,01 cm.

Günstig ist es, wenn mindestens eine Detektionshilfe in Form von kreisförmigen Marken, Adaptern oder Markierungen an den interessierenden Stellen auf ein zu überwachendes Objekt aufgeklebt oder in das zu überwachende Objekt eingesetzt ist.

Zur Bearbeitung und/oder Überwachung des Werkstücks kann vorgesehen sein, dass das Werkzeug und/oder die Bilderzeugungsvorrichtung motorisch verfahrbar sind.

Vorzugsweise ist die Bilderzeugungsvorrichtung an jede durch die Achsen der Bewegungseinrichtungen der Werkzeugträgervorrichtung (Maschinenachsen) erreichbare Position fahrbar. Dadurch ist auch der erforderliche Fokus für die Bilderzeugungsvorrichtung besonders einfach einstellbar.

Insbesondere kann die Bilderzeugungsvorrichtung in jede Position relativ zu dem Werkstück gebracht werden, in welche das Werkzeug relativ zu dem Werkstück gebracht werden kann.

Alternativ oder ergänzend hierzu kann vorgesehen sein, dass zur Bearbeitung und/oder Überwachung des Werkstücks das Werkstück motorisch verfahrbar ist.

Die vorliegende Erfindung betrifft ferner ein Verfahren zur Überwachung der Art, der Position und/oder der Orientierung
- a): mindestens eines Werkstücks, welches mittels mindestens einer Spann- vorrichtung an einer Werkstückbearbeitungsvorrichtung oder an min- destens einer Werkstückaufnahmevorrichtung eingespannt ist,
- b): mindestens einer Werkstückaufnahmevorrichtung, an der das min- destens eine Werkstück gehalten ist, und/oder
- c): mindestens einer Spannvorrichtung zum Einspannen mindestens eines Werkstücks an einer Werkstückbearbeitungsvorrichtung oder an min- destens einer Werkstückaufnahmevorrichtung.

Der vorliegenden Erfindung liegt die Aufgabe zugrunde, ein solches Verfahren zu schaffen, welches auf flexible Art und Weise eine umfassende Überwachung auch komplexer Systeme ermöglicht.

Diese Aufgabe wird durch ein Verfahren nach Anspruch 15 gelöst.

Erfindungsgemäß ist vorgesehen, dass mittels der Bilderzeugungsvorrichtung mindestens ein Sollbild erzeugt wird, welches ein Werkstück, eine Werkstückaufnahmevorrichtung und/oder eine Spannvorrichtung in einer Sollart, Sollposition und/oder Sollorientierung zeigt.

Ferner ist erfindungsgemäß vorgesehen, dass bei dem Verfahren mittels einer Bildauswertungsvorrichtung eine Bildauswertung durchgeführt wird, bei der mindestens ein Sollbild des Werkstücks, der Werkstückaufnahmevorrichtung und/oder der Spannvorrichtung mit mindestens einem Istbild verglichen wird.

Das erfindungsgemäße Verfahren weist die vorstehend im Zusammenhang mit der erfindungsgemäßen Überwachungsvorrichtung oder der erfindungsgemäßen Werkstückbearbeitungsvorrichtung erläuterten Vorteile auf.

Die erfindungsgemäße Überwachungsvorrichtung eignet sich insbesondere zur Durchführung des erfindungsgemäßen Verfahrens.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: eine schematische Draufsicht auf die Oberseite einer ersten Aus- führungsform einer Werkstückbearbeitungsvorrichtung mit einer verfahrbaren Werkstückaufnahmevorrichtung und einer verfahr- baren Werkzeugträgervorrichtung, wobei die Werkstückaufnah- mevorrichtung und die Werkzeugträgervorrichtung jeweils in einer ersten Position angeordnet sind;
- Fig. 2: eine der Fig. 1 entsprechende schematische Draufsicht auf die Oberseite der Werkstückbearbeitungsvorrichtung aus Fig. 1, wobei die Werkzeugaufnahmevorrichtung in ihrer ersten Position und die Werkzeugträgervorrichtung in einer zweiten Position angeordnet ist;
- Fig. 3: eine der Fig. 1 entsprechende schematische Draufsicht auf die Oberseite der Werkstückbearbeitungsvorrichtung aus Fig. 1, wobei die Werkstückaufnahmevorrichtung in einer zweiten Posi- tion und die Werkzeugträgervorrichtung in ihrer ersten Position angeordnet ist;
- Fig. 4: eine schematische Seitenansicht der Werkstückbearbeitungsvor- richtung aus Fig. 3, mit der Blickrichtung in Richtung des Pfeiles 4 in Fig. 3, wobei ein Bearbeitungskopf der Werkzeugträgervorrich- tung in einer unteren ersten Position angeordnet und eine an einer Werkzeugaufnahme des Bearbeitungskopfes angeordnete Bilderzeugungsvorrichtung auf ein erstes Spannelement ausge- richtet ist;
- Fig. 5: eine der Fig. 4 entsprechende schematische Seitenansicht der Werkstückbearbeitungsvorrichtung aus Fig. 4, wobei die Bilder- zeugungsvorrichtung statt auf das erste Spannelement auf ein zweites Spannelement ausgerichtet ist;
- Fig. 6: eine der Fig. 4 entsprechende schematische Seitenansicht der Werkstückbearbeitungsvorrichtung aus Fig. 4, wobei der Bear- beitungskopf der Werkzeugträgervorrichtung in einer oberen zweiten Position angeordnet und die Bilderzeugungsvorrichtung auf einen Bereich zwischen dem ersten und dem zweiten Spann- element ausgerichtet ist;
- Fig. 7: eine der Fig. 4 entsprechende schematische Seitenansicht der Werkstückbearbeitungsvorrichtung aus Fig. 1, wobei der Bear- beitungskopf der Werkzeugträgervorrichtung in der oberen zwei- ten Position angeordnet und die Bilderzeugungsvorrichtung auf die in ihrer ersten Position angeordnete Werkstückaufnahmevor- richtung ausgerichtet ist;

- Fig. 8: eine schematische Seitenansicht einer zweiten Ausführungsform der Werkstückbearbeitungsvorrichtung mit einer neben einer Werkzeugaufnahme des Bearbeitungskopfs angeordneten Bilder- zeugungsvorrichtung;
- Fig. 9: eine schematische Draufsicht auf die Oberseite der Werkstück- bearbeitungsvorrichtung aus Fig. 8, mit der Blickrichtung in Richtung des Pfeiles 9 in Fig. 8;
- Fig. 10: eine schematische perspektivische Darstellung einer dritten Aus- führungsform der Werkstückbearbeitungsvorrichtung mit einer an einem Werkzeugmagazin angeordneten Bilderzeugungsvorrich- tung; und
- Fig. 11: eine der Fig. 10 entsprechende schematische perspektivische Darstellung der Werkstückbearbeitungsvorrichtung aus Fig. 10, mit an der Werkzeugaufnahme angeordneter Bilderzeugungs- vorrichtung.

Gleiche oder funktional äquivalente Elemente sind in allen Figuren mit denselben Bezugszeichen versehen.

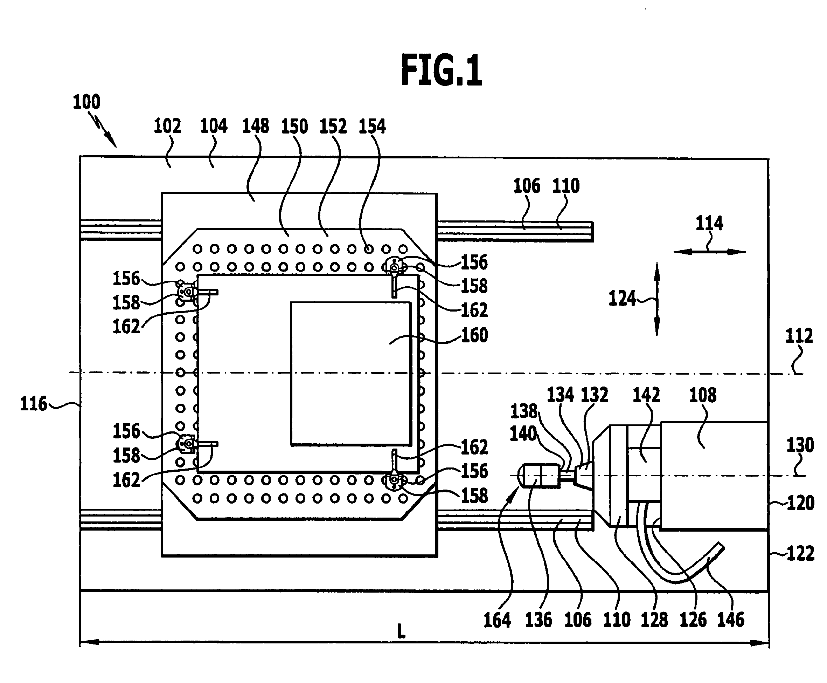

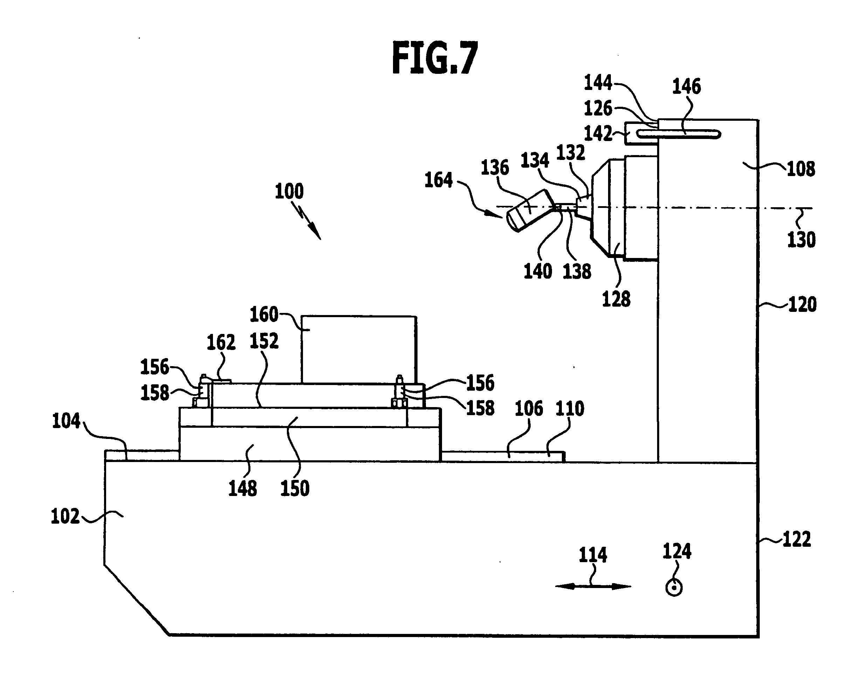

Eine in den Fig. 1 bis 7 dargestellte, als Ganzes mit 100 bezeichnete Werkstückbearbeitungsvorrichtung umfasst einen im Wesentlichen quaderförmigen Grundkörper 102 mit einer Oberseite 104.

An der Oberseite 104 des Grundkörpers 102 der Werkstückbearbeitungsvorrichtung 100 sind eine Führungseinrichtung 106 zur Führung einer (noch zu beschreibenden) Palette und eine Werkzeugträgervorrichtung 108 zur Aufnahme von Werkzeugen angeordnet.

Die Führungseinrichtung 106 umfasst zwei parallel zueinander verlaufende Führungsschienen 110, die beabstandet voneinander an der Oberseite 104 des Grundkörpers 102 der Werkstückbearbeitungsvorrichtung 100 angeordnet und bezüglich einer sich in vertikaler Richtung und in einer Längsrichtung 114 der Werkstückbearbeitungsvorrichtung 100 erstreckenden Längsmittelebene 112 der Werkstückbearbeitungsvorrichtung 100 spiegelsymmetrisch zueinander ausgebildet sind.

Die Führungsschienen 110 erstrecken sich in der Längsrichtung 114 der Werkstückbearbeitungsvorrichtung 100 von einer Vorderseite 116 der Werkstückbearbeitungsvorrichtung 100 über mindestens ungefähr 70 % einer Gesamtlänge L des Grundkörpers 102 der Werkstückbearbeitungsvorrichtung 100.

Die Werkzeugträgervorrichtung 108 der Werkstückbearbeitungsvorrichtung 100 ist an der Oberseite 104 des Grundkörpers 102 der Werkstückbearbeitungsvorrichtung 100 angeordnet und grenzt mit einer Rückseite 120 der Werkzeugträgervorrichtung 108 an eine der Vorderseite 116 der Werkstückbearbeitungsvorrichtung 100 gegenüberliegende Rückseite 122 der Werkstückbearbeitungsvorrichtung 100.

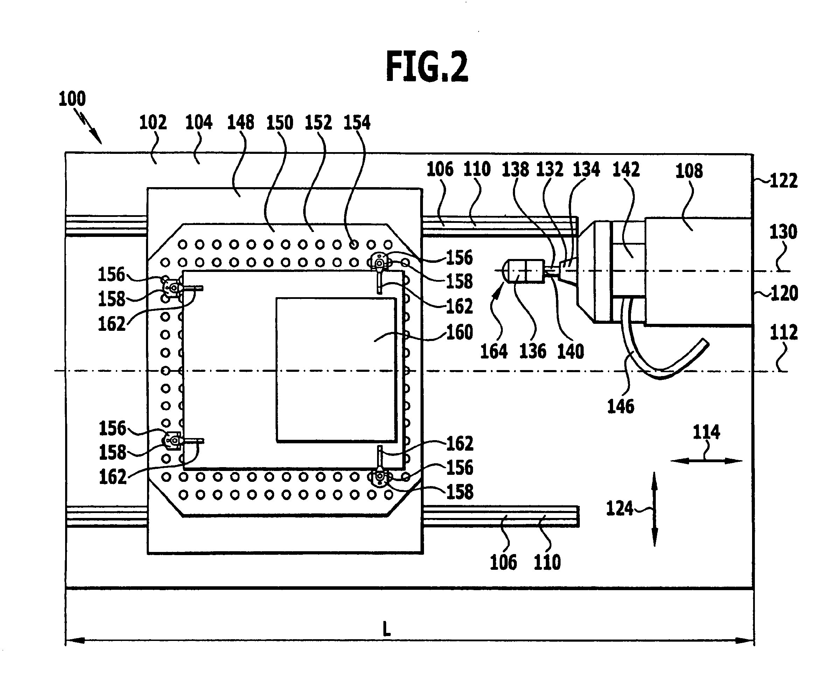

Die Werkzeugträgervorrichtung 108 ist im Wesentlichen quaderförmig ausgebildet und in einer senkrecht zur Längsrichtung 114 und parallel zur Oberseite 104 des Grundkörpers 102 der Werkstückbearbeitungsvorrichtung 100 verlaufenden Querrichtung 124 der Werkstückbearbeitungsvorrichtung 100 motorisch verfahrbar (siehe Fig. 1 und 2).

An einer der Rückseite 120 der Werkzeugträgervorrichtung 108 gegenüberliegenden Vorderseite 126 der Werkzeugträgervorrichtung 108 ist ein Bearbeitungskopf 128 angeordnet.

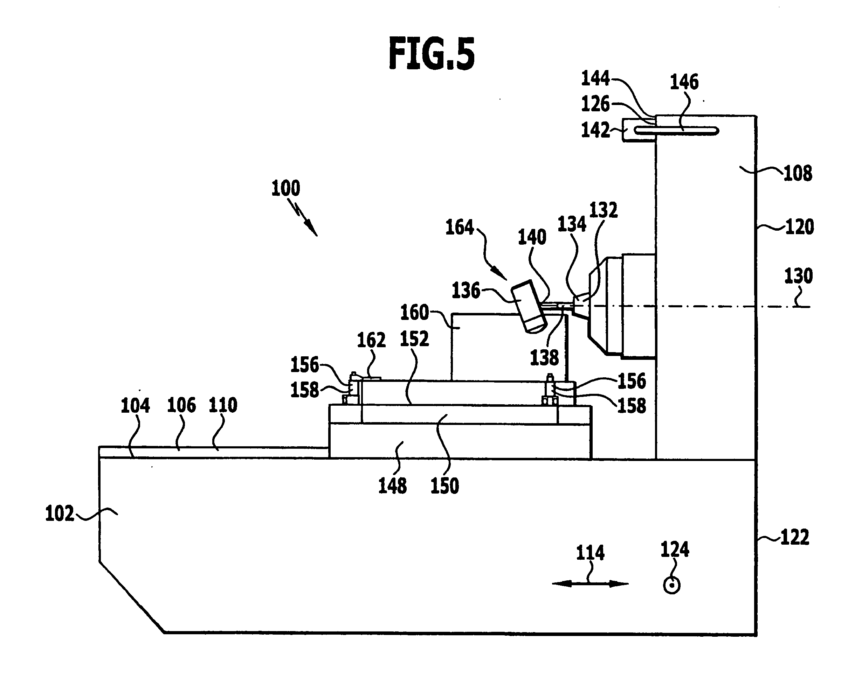

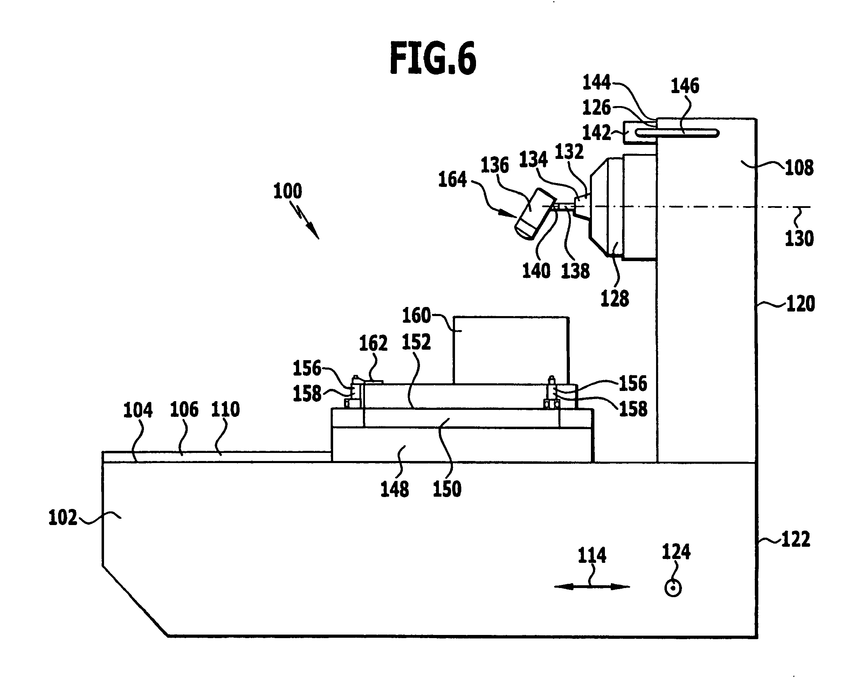

Mittels einer (nicht dargestellten) Bewegungseinrichtung ist der Bearbeitungskopf 128 in vertikaler Richtung entlang der Vorderseite 126 der Werkzeugträgervorrichtung 108 motorisch verfahrbar (siehe Fig. 5 und 6).

Der Bearbeitungskopf 128 ist bezüglich einer horizontalen Rotationsachse 130 rotationssymmetrisch ausgebildet und weist an seiner der Vorderseite 126 der Werkzeugträgervorrichtung 108 abgewandten Seite eine motorisch um die Rotationsachse 130 drehbare Maschinenspindel 132 mit einer Werkzeugaufnahme 134 auf.

Als Werkzeugaufnahme 134 kann eine Standardwerkzeugaufnahme, beispielsweise ein Hohlschaftkegel (HSK) oder ein Steilkegel (SK), verwendet werden.

An der Werkzeugaufnahme 134 ist eine Bilderzeugungsvorrichtung 136 mittels eines beispielsweise im Wesentlichen zylinderförmigen Schafts 138 gehalten.

Mittels der Maschinenspindel 132 ist die Werkzeugaufnahme 134 und die daran gehaltene Bilderzeugungsvorrichtung 136 um die Rotationsachse 130 drehbar.

Dadurch ist ein mittels der Bilderzeugungsvorrichtung 136 zu erfassender Bereich in der Querrichtung 124 einstellbar.

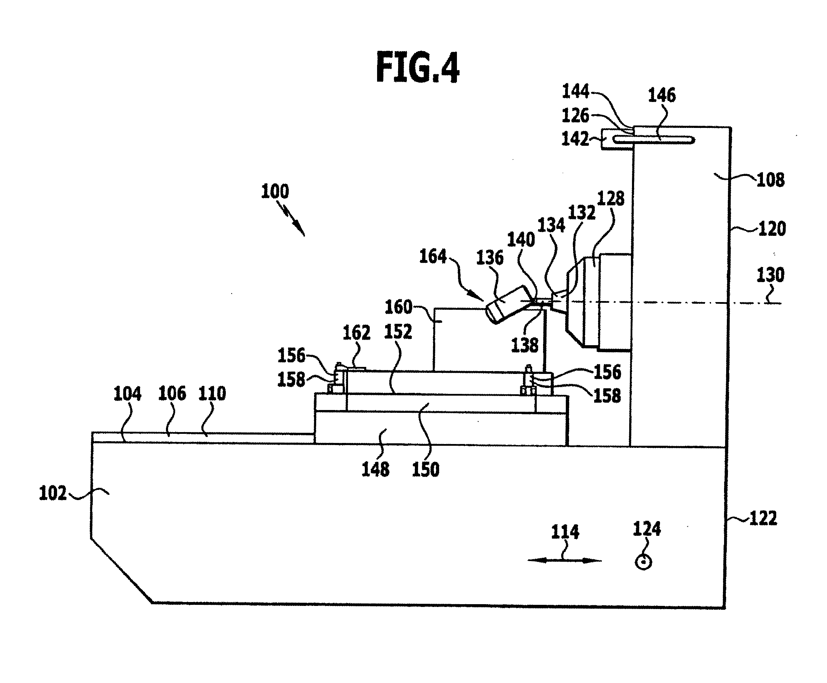

Die Bilderzeugungsvorrichtung 136 umfasst eine Schwenkvorrichtung 140, mittels welcher ein von der Bilderzeugungsvorrichtung 136 zu erfassender Bereich in der Längsrichtung 114 einstellbar ist (siehe Fig. 4 bis 7).

Zur Übermittlung von Daten und Signalen, insbesondere zur Übermittlung der mittels der Bilderzeugungsvorrichtung 136 erzeugten Bilder, umfasst die Bilderzeugungsvorrichtung 136 eine (nicht dargestellte) Sendeeinheit.

Eine die mittels der Sendeeinheit gesendeten Daten und Signale empfangende Empfangseinheit 142 ist an einem oberen Randbereich 144 der Vorderseite 126 der Werkzeugträgervorrichtung 108 angeordnet (siehe beispielsweise Fig. 4).

Die Empfangseinheit 142 ist vorzugsweise eine Standard-Empfangseinheit, wie sie in Verbindung mit Messtastern Verwendung findet. Dadurch können mit nur einer Empfangseinheit 142 sowohl Daten und Signale von (nicht dargestellten) Messtastern als auch Daten und Signale von der Bilderzeugungsvorrichtung 136 empfangen werden.

Alternativ hierzu kann jedoch auch eine separate Empfangseinheit 142 für die Bilderzeugungsvorrichtung 136 vorgesehen sein.

Die mittels der Empfangseinheit 142 empfangenen Daten und Signale sind mittels einer Signalleitung 146 zu einer (nicht dargestellten) Bildauswertungsvorrichtung übertragbar.

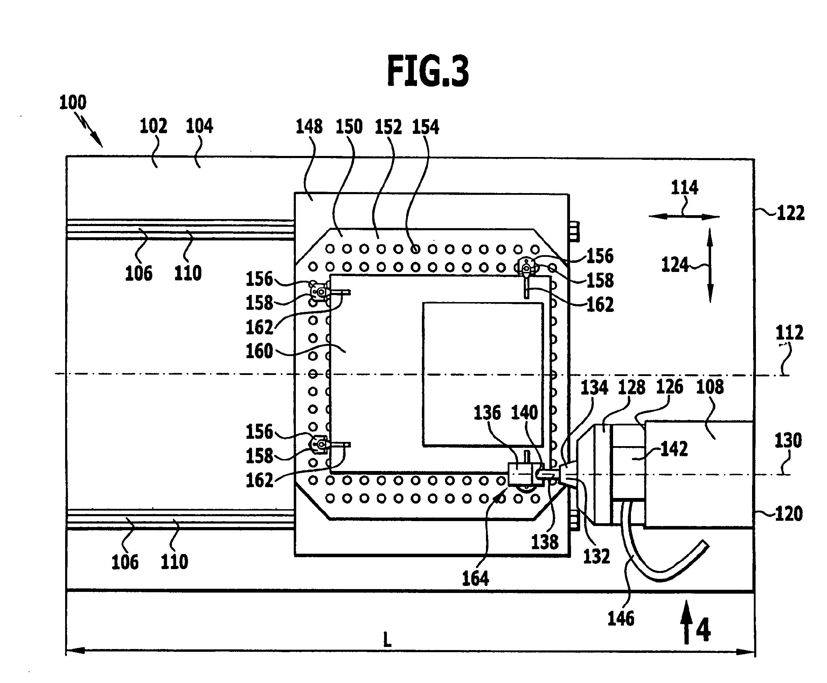

An den Führungsschienen 110 der Führungseinrichtung 106 ist eine Palette 148 angeordnet, die an ihrer Unterseite zu den Führungsschienen 110 komplementäre Führungsnuten aufweist. Die Palette 148 ist somit entlang der Führungsschienen 110 der Führungseinrichtung 106 geführt, insbesondere motorisch, verfahrbar (siehe Fig. 2 und 3).

Durch die Ausrichtung der Führungsschienen 110 in der Längsrichtung 114 ist die Palette 148 zu der Werkzeugträgervorrichtung 108 hin und von derselben weg geführt verfahrbar.

An der Palette 148 ist eine Werkstückaufnahmevorrichtung 150 angeordnet.

Die Oberseite der Werkstückaufnahmevorrichtung 150 bildet eine Auflagefläche 152 und weist eine Vielzahl von in einem rasterförmigen Muster angeordneten Sacklöchern 154 zur Aufnahme von Befestigungsmitteln einer oder mehrerer Spannvorrichtungen 156 auf.

Die Spannvorrichtungen 156 sind als Spannelemente 158 ausgebildet, die relativ zu den Sacklöchern 154 festgelegt werden können. Ein Werkstück 160 kann mittels mehrerer Spannelemente 158 zwischen die Auflagefläche 152 der Werkstückaufnahmevorrichtung 150 und das Werkstück 160 übergreifende Spannteile 162 der Spannelemente 158 eingespannt werden.

Die Bilderzeugungsvorrichtung 136 mit der (nicht dargestellten) Sendeeinheit, dem Schaft 138 und der Schwenkvorrichtung 140, die Empfangseinheit 142, die Signalleitung 146 und die (nicht dargestellte) Bildauswertungsvorrichtung sind Teile einer als Ganzes mit 164 bezeichneten überwachungsvorrichtung.

Die Überwachungsvorrichtung 164 dient zur Überwachung der Art, der Position und/oder der Orientierung
- a): mindestens eines Werkstücks 160, welches mittels mindestens einer Spannvorrichtung 156 an einer Werkstückbearbeitungsvorrichtung 100 oder an mindestens einer Werkstückaufnahmevorrichtung 150 einge- spannt ist,
- b): mindestens einer Werkstückaufnahmevorrichtung 150, an der das min- destens eine Werkstück 160 gehalten ist, und/oder
- c): mindestens einer Spannvorrichtung 156 zum Einspannen mindestens eines Werkstücks 160 an einer Werkstückbearbeitungsvorrichtung 100 oder an mindestens einer Werkstückaufnahmevorrichtung 150.

Die vorstehend beschriebene Werkstückbearbeitungsvorrichtung 100 funktioniert wie folgt: In die Werkzeugaufnahme 134 wird ein Werkzeug zur Bearbeitung eines Werkstücks 160 eingespannt.

Das zu bearbeitende Werkstück 160 wird an der Auflagefläche 152 der Werkstückaufnahmevorrichtung 150 angeordnet und mittels der Spannvorrichtung 156 befestigt.

Hierzu werden die Spannteile 162 der Spannelemente 158 der Spannvorrichtung 156 so ausgerichtet, dass sie das Werkstück 160 übergreifen können. Anschließend wird mittels der Spannteile 162 auf das Werkstück 160 eine Kraft in Richtung der Auflagefläche 152 ausgeübt, um das Werkstück 160 zwischen die Spannteile 162 der Spannelemente 158 der Spannvorrichtung 156 und die Auflagefläche 152 der Werkstückaufnahmevorrichtung 150 einzuspannen.

Mittels der Führungseinrichtung 106 wird die Palette 148 samt der Werkstückaufnahmevorrichtung 150 und dem Werkstück 160 in eine in den Fig. 3 bis 6 dargestellte Werkstückbearbeitungsposition verfahren.

In dieser Werkstückbearbeitungsposition wird das Werkstück 160 mittels des an der Werkzeugaufnahme 134 der Werkzeugträgervorrichtung 108 gehaltenen Werkzeugs bearbeitet.

Hierzu wird das Werkzeug mittels der Maschinenspindel 132 motorisch um die Rotationsachse 130 gedreht und mittels der (nicht dargestellten) Bewegungseinrichtungen der Werkzeugträgervorrichtung 108 in der Querrichtung 124 und in vertikaler Richtung in vorgegebener Weise motorisch verfahren.

Vor einem ersten solchen Bearbeitungsschritt, zwischen zwei Bearbeitungsschritten und/oder nach abgeschlossener Bearbeitung des Werkstücks 160 wird das in der Werkzeugaufnahme 134 angeordnete Werkzeug durch die Bilderzeugungsvorrichtung 136 ersetzt.

Mittels der (nicht dargestellten) Bewegungseinrichtungen der Werkzeugträgervorrichtung 108 wird die Bilderzeugungsvorrichtung 136 in der vertikalen Richtung und in der Querrichtung 124 so verfahren, dass mittels der Bilderzeugungsvorrichtung 136 ein Bild von einem Bereich erzeugbar ist, welcher mittels der Überwachungsvorrichtung 164 überwacht werden soll.

Insbesondere wird mittels der Bilderzeugungsvorrichtung 136 ein Bild eines Bearbeitungsbereichs des Werkstücks 160 aus der Perspektive des Werkzeugs erzeugt, mittels welchem das Werkstück 160 bearbeitet werden soll oder bearbeitet worden ist.

Mittels einer (nicht dargestellten) Beleuchtungsvorrichtung wird der zu erfassende Bereich zur Verbesserung der Lichtverhältnisse bei der Bilderzeugung beleuchtet.

Ein mittels der Bilderzeugungsvorrichtung 136 erzeugtes Bild wird mittels der (nicht dargestellten) Sendeeinheit zu der Empfangseinheit 142 übertragen und von dort mittels der Signalleitung 146 zu der (nicht dargestellten) Bildauswertungsvorrichtung weitergeleitet.

Eine Auswertung des mittels der Bilderzeugungsvorrichtung 136 erzeugten Bildes erfolgt beispielsweise mittels einer Auswertesoftware durch einen Vergleich zwischen einem Soll-Bild und dem erzeugten Ist-Bild.

Abweichungen der Ist-Bilder von den entsprechenden Soll-Bildern werden beispielsweise dadurch ermittelt, dass Differenzen zwischen Helligkeitswerten einander entsprechender Stellen im Ist-Bild und im Soll-Bild gebildet werden und geprüft wird, ob diese Differenzen einen vorgegebenen Toleranzwert überschreiten.

In Abhängigkeit von dem Ergebnis der Auswertung wird dann ein Signal an eine Maschinensteuerung oder an eine Bedienungsperson gegeben, um eine Bearbeitung des Werkstücks 160 zu beginnen oder fortzusetzen oder das Werkstück 160 von der Werkstückaufnahmevorrichtung 150 zu entfernen.

Durch die Anordnung der Bilderzeugungsvorrichtung 136 an dem Bearbeitungskopf 128 ist eine einfache Erfassung einer Vielzahl von zu überwachenden Bereichen möglich.

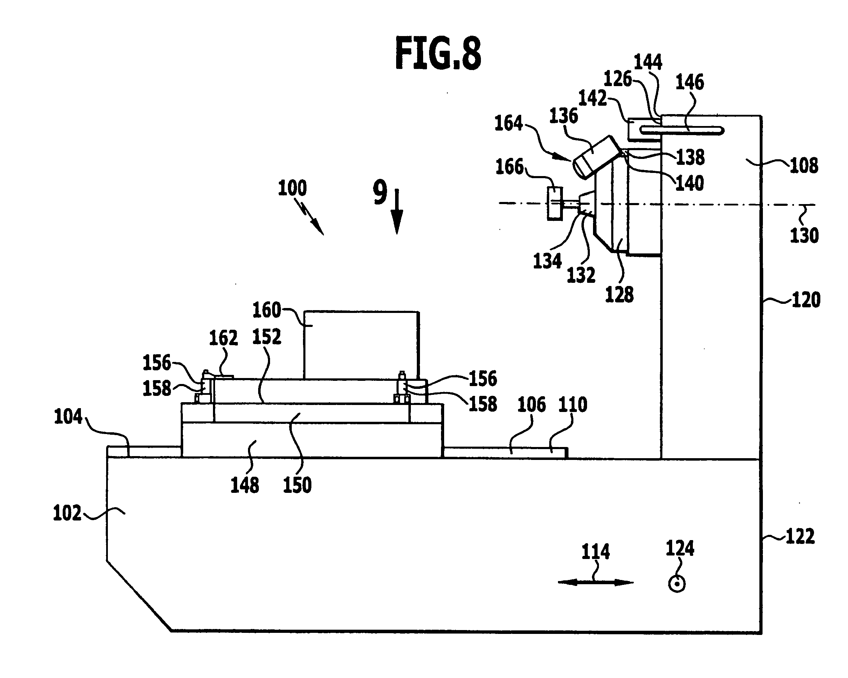

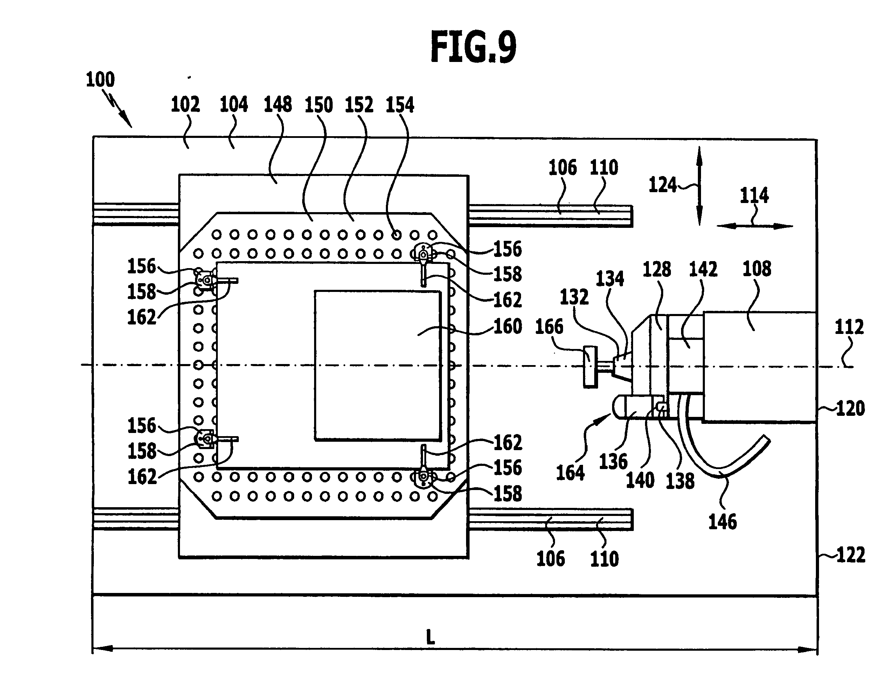

Eine in den Fig. 8 und 9 dargestellte zweite Ausführungsform der Werkstückbearbeitungsvorrichtung 100 unterscheidet sich von der in den Fig. 1 bis 7 dargestellten ersten Ausführungsform dadurch, dass die Bilderzeugungsvorrichtung 136 nicht direkt an der Werkzeugaufnahme 134 selbst, sondern an dem Bearbeitungskopf 128 neben der Werkzeugaufnahme 134 angeordnet ist.

Dadurch können zeitgleich ein Werkzeug 166 zur Bearbeitung des Werkstücks 160 an der Werkzeugaufnahme 134 und die Bilderzeugungsvorrichtung 136 an dem Bearbeitungskopf 128 angeordnet sein.

Insbesondere ist dadurch eine Überwachung beispielsweise des Werkstücks 160 und des Werkzeugs 166 mittels der Überwachungsvorrichtung 164 während einer Bearbeitung des Werkstücks 160 mittels des Werkzeugs 166 möglich.

Da bei dieser Ausführungsform der Werkstückbearbeitungsvorrichtung 100 eine Rotation der Bilderzeugungsvorrichtung 136 um die Rotationsachse 130 mittels der Maschinenspindel 132 nicht möglich ist, ist an der Bilderzeugungsvorrichtung 136 zusätzlich zu der Schwenkvorrichtung 140 eine (nicht dargestellte) Drehvorrichtung vorgesehen, um die Bilderzeugungsvorrichtung 136 bezüglich einer parallel zur Rotationsachse 130 verlaufenden Achse drehen zu können.

Im Übrigen stimmt die in den Fig. 8 und 9 dargestellte zweite Ausführungsform der Werkstückbearbeitungsvorrichtung 100 hinsichtlich Aufbau und Funktion mit der in den Fig. 1 bis 7 dargestellten ersten Ausführungsform überein, auf deren vorstehende Beschreibung insoweit Bezug genommen wird.

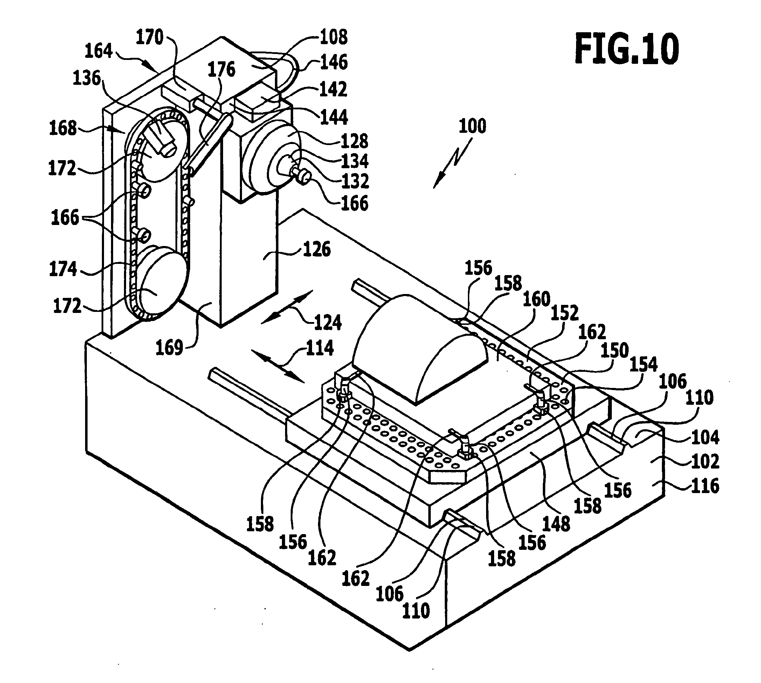

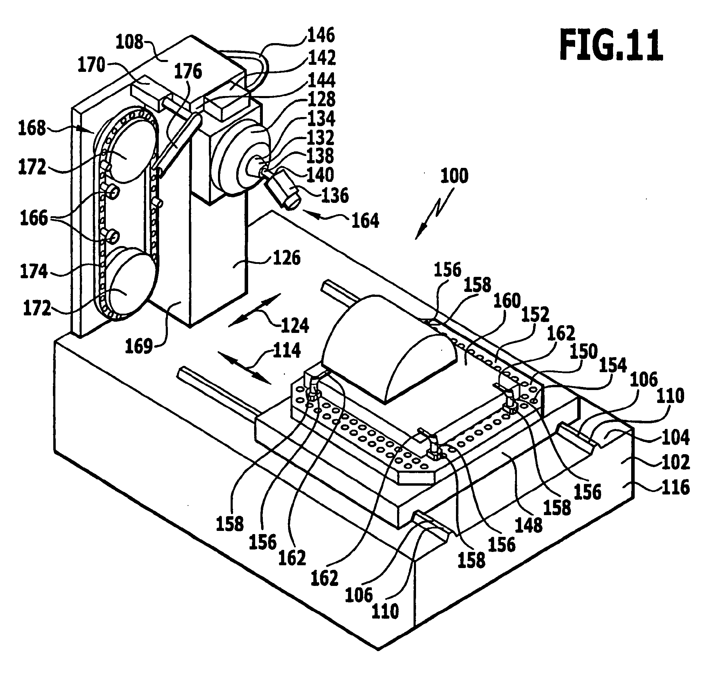

Eine in den Fig. 10 und 11 dargestellte dritte Ausführungsform einer Werkstückbearbeitungsvorrichtung 100 unterscheidet sich von der in den Fig. 1 bis 7 dargestellten ersten Ausführungsform dadurch, dass die Werkstückbearbeitungsvorrichtung 100 zusätzlich ein Werkzeugmagazin 168 und eine Werkzeugwechselvorrichtung 170 umfasst.

Das Werkzeugmagazin 168 ist als Endlosmagazin ausgebildet und an einer Seitenwand 169 der Werkzeugträgervorrichtung 108 angeordnet.

Das Werkzeugmagazin 168 umfasst zwei übereinander angeordnete, vertikal ausgerichtete Antriebsscheiben 172 und ein Werkzeugaufnahmeband 174, welches mittels der Antriebsscheiben 172 in vertikaler Richtung gespannt ist und durch die Antriebsscheiben 172 motorisch antreibbar ist.

An dem Werkzeugaufnahmeband 174 sind diejenigen Werkzeuge 166 angeordnet, welche gerade nicht zur Bearbeitung des Werkstücks 160 verwendet werden.

Ferner ist an dem Werkzeugaufnahmeband 174 eine Bilderzeugungsvorrichtung 136 angeordnet (siehe Fig. 10).

Die Werkzeugwechselvorrichtung 170 umfasst einen Greifarm 176, mittels welchem ein an der Werkzeugaufnahme 134 der Maschinenspindel 132 des Bearbeitungskopfs 128 angeordnetes Werkzeug 166 von der Werkzeugaufnahme 134 der Maschinenspindel 132 des Bearbeitungskopfs 128 entfernbar und an dem Werkzeugaufnahmeband 174 des Werkzeugmagazins 168 anordenbar ist.

Ferner ist mittels des Greifarms 176 der Werkzeugwechselvorrichtung 170 die an dem Werkzeugaufnahmeband 174 des Werkzeugmagazins 168 angeordnete Bilderzeugungsvorrichtung 136 von dem Werkzeugaufnahmeband 174 des Werkzeugmagazins 168 entfernbar und an der Werkzeugaufnahme 134 der Maschinenspindel 132 des Bearbeitungskopfs 128 anordenbar.

Vorzugsweise erfolgt ein derartiger Wechsel der Werkzeuge 166 und der Bilderzeugungsvorrichtung 136 vollautomatisch.

Die im Zusammenhang mit der ersten Ausführungsform der Werkstückbearbeitungsvorrichtung 100 beschriebene Auswechslung der Bilderzeugungsvorrichtung 136 durch ein Werkzeug 166 oder die Auswechslung eines Werkzeugs 166 durch die Bilderzeugungsvorrichtung 136 erfolgt somit bei der dritten Ausführungsform der Werkstückbearbeitungsvorrichtung 100 vollautomatisch.

Dies ermöglicht einen vollautomatischen Betrieb der Werkstückbearbeitungsvorrichtung 100 mit der Überwachungsvorrichtung 164.

Das Werkzeugaufnahmeband 174 ist mit einer (nicht dargestellten) Energieversorgungseinheit versehen, um die (nicht dargestellte) Energiequelle der Bilderzeugungsvorrichtung 136 aufzuladen, wenn die Bilderzeugungsvorrichtung 136 an dem Werkzeugaufnahmeband 174 angeordnet ist.

Im Übrigen stimmt die in den Fig. 10 und 11 dargestellte dritte Ausführungsform der Werkstückbearbeitungsvorrichtung 100 hinsichtlich Aufbau und Funktion mit der in den Fig. 1 bis 7 dargestellten ersten Ausführungsform überein, auf deren vorstehende Beschreibung insoweit Bezug genommen wird.

Dadurch, dass bei allen Ausführungsformen eine Bilderzeugungsvorrichtung an einem Bearbeitungskopf der Werkstückbearbeitungsvorrichtung anordenbar ist, ist eine einfache und flexible Überwachung der Werkstückbearbeitungsvorrichtung, der Werkstückaufnahmevorrichtung, der Spannvorrichtung und des Werkstücks möglich.

## Patentansprüche

1. Überwachungsvorrichtung zur Überwachung der Art, der Position und/oder der Orientierung
a) mindestens eines Werkstücks (160), welches mittels mindestens einer Spannvorrichtung (156) an einer Werkstückbearbeitungsvor- richtung (100) oder an mindestens einer Werkstückaufnahmevor- richtung (150) eingespannt ist,
b) mindestens einer Werkstückaufnahmevorrichtung (150), an der das mindestens eine Werkstück (160) gehalten ist, und/oder
c) mindestens einer Spannvorrichtung (156) zum Einspannen min- destens eines Werkstücks (160) an einer Werkstückbearbeitungs- vorrichtung (100) oder an mindestens einer Werkstückaufnahme- vorrichtung (150),
**dadurch gekennzeichnet,**
**dass** die Überwachungsvorrichtung (164) eine Bilderzeugungsvorrichtung (136) und eine Bildauswertungsvorrichtung umfasst und dass die Bilderzeugungsvorrichtung (136) an einem Bearbeitungskopf (128) der Werkstückbearbeitungsvorrichtung (100) anordenbar ist,
wobei mittels der Bilderzeugungsvorrichtung (136) mindestens ein Sollbild erzeugbar ist, welches ein Werkstück (160), eine Werkstückaufnahmevorrichtung (150) und/oder eine Spannvorrichtung (156) in einer Sollart, Sollposition und/oder Sollorientierung zeigt,
wobei mittels der Bildauswertungsvorrichtung eine Bildauswertung durchführbar ist, bei der mindestens ein Sollbild des Werkstücks (160), der Werkstückaufnahmevorrichtung (150) bzw. der Spannvorrichtung (156) mit mindestens einem Istbild verglichen wird, und
wobei mittels der Bildauswertungsvorrichtung ein Ausgangssignal zum Freischalten oder Sperren mindestens einer Funktion der Werkstückbearbeitungsvorrichtung (100) erzeugbar ist.

2. Überwachungsvorrichtung nach Anspruch 1, **dadurch gekennzeichnet, dass** die Bilderzeugungsvorrichtung (136) statt eines Werkzeugs (166) an einer Werkzeugaufnahme (134) des Bearbeitungskopfs (128) der Werkstückbearbeitungsvorrichtung (100) anordenbar ist.

3. Überwachungsvorrichtung nach Anspruch 1, **dadurch gekennzeichnet, dass** die mindestens eine Bilderzeugungsvorrichtung (136) neben einer Werkzeugaufnahme (134) des Bearbeitungskopfs (128) der Werkstückbearbeitungsvorrichtung (100) anordenbar ist.

4. Überwachungsvorrichtung nach einem der Ansprüche 1 bis 3, **dadurch gekennzeichnet, dass** die Bilderzeugungsvorrichtung (136) eine Sendeeinheit zum Senden von Signalen umfasst, welche von einer Empfangseinheit (142) der Überwachungsvorrichtung (164) empfangbar sind.

5. Überwachungsvorrichtung nach Anspruch 4, **dadurch gekennzeichnet, dass** mindestens eine Verbindung zwischen der Sendeeinheit und der Empfangseinheit (142) drahtlos ausgebildet ist.

6. Überwachungsvorrichtung nach einem der Ansprüche 1 bis 5, **dadurch gekennzeichnet, dass** die Bilderzeugungsvorrichtung (136) eine Energiequelle umfasst.

7. Überwachungsvorrichtung nach einem der Ansprüche 1 bis 6, **dadurch gekennzeichnet, dass** die Bilderzeugungsvorrichtung (136) motorisch verschwenkbar ist.

8. Überwachungsvorrichtung nach einem der Ansprüche 1 bis 7, **dadurch gekennzeichnet, dass** die Bilderzeugungsvorrichtung (136) ein abbildendes optisches System umfasst.

9. Überwachungsvorrichtung nach Anspruch 8, **dadurch gekennzeichnet, dass** ein Fokus des abbildenden optischen Systems motorisch einstellbar ist.

10. Überwachungsvorrichtung nach einem der Ansprüche 1 bis 9, **dadurch gekennzeichnet, dass** der Bilderzeugungsvorrichtung (136) eine Beleuchtungsvorrichtung zugeordnet ist.

11. Werkstückbearbeitungsvorrichtung, umfassend einen Bearbeitungskopf (128) und eine Überwachungsvorrichtung (164) nach einem der Ansprüche 1 bis 10.

12. Werkstückbearbeitungsvorrichtung nach Anspruch 11, **dadurch gekennzeichnet, dass** der Bearbeitungskopf (128) eine Werkzeugaufnahme (134) umfasst, an welcher die Bilderzeugungsvorrichtung (136) statt eines Werkzeugs (166) anordenbar ist.

13. Werkstückbearbeitungsvorrichtung nach einem der Ansprüche 11 oder 12, **dadurch gekennzeichnet, dass** die Werkstückbearbeitungsvorrichtung (100) ein Werkzeugmagazin (168) zur Lagerung mehrerer Werkzeuge (166) umfasst.

14. Werkstückbearbeitungsvorrichtung nach einem der Ansprüche 11 bis 13, **dadurch gekennzeichnet, dass** die Werkstückbearbeitungsvorrichtung (100) eine Werkzeugwechselvorrichtung (170) umfasst, mittels welcher ein an der Werkzeugaufnahme (134) angeordnetes Werkzeug (166) maschinell durch ein anderes Werkzeug (166) ersetzbar ist.

15. Verfahren zur Überwachung der Art, der Position und/oder der Orientierung
a) mindestens eines Werkstücks (160), welches mittels mindestens einer Spannvorrichtung (156) an einer Werkstückbearbeitungsvor- richtung (100) oder an mindestens einer Werkstückaufnahmevor- richtung (150) eingespannt ist,
b) mindestens einer Werkstückaufnahmevorrichtung (150), an der das mindestens eine Werkstück (160) gehalten ist, und/oder
c) mindestens einer Spannvorrichtung (156) zum Einspannen min- destens eines Werkstücks (160) an einer Werkstückbearbeitungs- vorrichtung (100) oder an mindestens einer Werkstückaufnahme- vorrichtung (150),
**gekennzeichnet durch** folgende Verfahrensschritte:
- Anordnen einer Bilderzeugungsvorrichtung (136) an einem Bearbeitungskopf (128) der Werkstückbearbeitungsvorrichtung (100),
- Erzeugen mindestens eines Sollbildes, welches ein Werkstück (160), eine Werkstückaufnahmevorrichtung (150) und/oder eine Spannvorrichtung (156) in einer Sollart, Sollposition und/oder Sollorientierung zeigt, mittels der Bilderzeugungsvorrichtung (136),
- Durchführen einer Bildauswertung, bei der mindestens ein Sollbild des Werkstücks (160), der Werkstückaufnahmevorrichtung (150) bzw, der Spannvorrichtung (156) mit einem Istbild verglichen wird, mittels einer Bildauswertungsvorrichtung,
- Erzeugen eines Ausgangssignals mittels der Bildauswertungsvorrichtung zum Freischalten oder Sperren mindestens einer Funktion der Werkstückbearbeitungsvorrichtung (100).

## Claims

1. Method for producing an electrically insulating sealing arrangement (100) for sealing between two components (102, 104) of a fuel cell stack, comprising the following method steps:
- producing at least one thin layer (106), which comprises a glass material and/or a ceramic material, by at least partial immersion of at least one of the components (102, 104) to be sealed in a liquid starting material and/or by spraying a liquid starting material on at least a part of at least one of the components (102, 104) to be sealed;
- brazing the component (102) provided with the thin layer (106) to the other component (104) to be sealed by means of a metallic braze;
**characterised in that** there are produced at least two thin layers (106; 106'; 106"; 106"') that are spaced apart from each other and comprise a glass material and/or a ceramic material, the layer thickness of the thin layers (106) being at most 100 µm and at least 0.5 µm.

2. Method according to claim 1, **characterised in that** the layer thickness of the thin layer (106) is at most 50 µm.

3. Method according to either of claims 1 or 2, **characterised in that** the method furthermore comprises the following method step:
- producing a metallic coating on the thin layer (106) before brazing to the other component (104) to be sealed.

4. Method according to any one of claims 1 to 3, **characterised in that** at least two thin layers (106, 106'; 106", 106"') are produced on the same one of the components (102, 104) to be sealed.

5. Method according to any one of claims 1 to 4, **characterised in that** at least two thin layers (106, 106') are produced on two different ones of the components (102, 104) to be sealed.

6. Method according to any one of claims 1 to 5, **characterised in that** the method furthermore comprises the following method step:
- heat treatment of at least one produced thin layer (106), wherein the material of the thin layer (106) is at least partially melted on and at least partially crystallised.

7. Method according to any one of claims 1 to 6, **characterised in that** the method comprises the following further method step:
- producing at least one wetting angle limitation layer (118) on a component (102) provided with a thin layer (106; 106') and to be sealed before brazing to the other component (104) to be sealed.

8. Method according to claim 7, **characterised in that** the wetting angle limitation layer (118) comprises an oxide ceramic material.

9. Method according to either of claims 7 or 8, **characterised in that** the wetting angle limitation layer (118) comprises copper oxide, aluminium oxide, titanium oxide, zirconium oxide and/or yttrium-stabilised zirconium oxide.

10. Method according to any one of claims 1 to 9, **characterised in that** the thin layer (106) produced contains particles comprising an oxide ceramic material.

11. Method according to claim 10, **characterised in that** the oxide ceramic material comprises a metal oxide material.

12. Method according to claim 11, **characterised in that** the metal oxide material contains Al, Zr and/or Mg as metal cations.

13. Method according to any one of claims 10 to 12, **characterised in that** the mean diameter of the particles is 10 µm to 100 µm.

14. Method according to any one of claims 1 to 13, **characterised in that** the glass material and/or the ceramic material comprises a glass of the system BaO - CaO - SiO₂, a glass of the system BaO - CaO - SiO₂ - Al₂O₃ and/or a glass of the system BaO - CaO - SiO₂ - Al₂O₃ - B₂O₃.

15. Fuel cell stack, comprising a sealing arrangement for sealing between two components (102, 104) of the fuel cell stack, comprising
- at least one electrically insulating thin layer (106), which comprises a glass material and/or a ceramic material and is produced by at least partial immersion of one of the components (102, 104) to be sealed in a liquid starting material and/or by spraying a liquid starting material onto at least a part of one of the components (102, 104) to be sealed; and
- a braze layer (108), which comprises a metallic braze;
**characterised in that** the sealing arrangement comprises at least two thin layers (106, 106'; 106"; 106"') that are spaced apart from one another and comprise a glass material and/or a ceramic material, the layer thickness of the thin layers (106) being at most 100 µm and at least 0.5 µm.

## Revendications

1. Dispositif de surveillance du type, de la position et/ou de l'orientation
a) d'au moins une pièce (160) serrée, au moyen d'au moins un dispositif de serrage (156) sur un dispositif d'usinage de pièces (100) ou sur au moins un porte-pièces (150),
b) d'au moins un porte-pièces (150) sur lequel au moins une pièce (160) est maintenue, et/ou
c) d'au moins un dispositif de serrage (156) pour le serrage d'au moins une pièce (160) sur un dispositif d'usinage de pièces (100) ou sur au moins un porte-pièces (150),
**caractérisé en ce que**
✔ le dispositif de surveillance (164) comporte un dispositif de production d'images (136) et un dispositif d'analyse d'images et le dispositif de production d'images (136) peut être placé sur une tête d'usinage (128) du dispositif d'usinage de pièces (100), le dispositif de production d'images (136) pouvant produire au moins une image théorique qui montre une pièce (160), un porte-pièces (150) et/ou un dispositif de serrage (156) d'un type théorique, dans une position théorique et/ou dans une orientation théorique,
✔ le dispositif d'analyse d'images permettant une analyse des images lors de laquelle au moins une image théorique de la pièce (160), du porte-pièces (150) et/ou du dispositif de serrage (156) est comparée à au moins une image réelle, et le dispositif d'analyse d'images permettant de produire un signal de sortie pour l'activation ou le blocage d'au moins une fonction du dispositif d'usinage de pièces (100).

2. Dispositif de surveillance selon la revendication 1, **caractérisé en ce que** le dispositif de production d'images (136) peut être placé, à la place d'un outil (166), sur un porte-outil (134) de la tête d'usinage (128) du dispositif d'usinage de pièces (100).

3. Dispositif de surveillance selon la revendication 1, **caractérisé en ce qu'**au moins un dispositif de production d'images (136) peut être placé à côté d'un porte-outil (134) de la tête d'usinage (128) du dispositif d'usinage de pièces (100).

4. Dispositif de surveillance selon l'une quelconque des revendications 1 à 3, **caractérisé en ce que** le dispositif de production d'images (136) comporte un émetteur pour l'émission de signaux pouvant être reçus par un récepteur (142) du dispositif de surveillance (164).

5. Dispositif de surveillance selon la revendication 4, **caractérisé en ce qu'**au moins une liaison sans fil est établie entre l'émetteur et le récepteur (142).

6. Dispositif de surveillance selon l'une quelconque des revendications 1 à 5, **caractérisé en ce que** le dispositif de production d'images (136) comporte une source d'énergie.

7. Dispositif de surveillance selon l'une quelconque des revendications 1 à 6, **caractérisé en ce que** le dispositif de production d'images (136) peut pivoter à l'aide d'un moteur.

8. Dispositif de surveillance selon l'une quelconque des revendications 1 à 7, **caractérisé en ce que** le dispositif de production d'images (136) comporte un système optique de représentation.

9. Dispositif de surveillance selon la revendication 8, **caractérisé en ce qu'**une focale du système optique de représentation peut être réglée à l'aide d'un moteur.

10. Dispositif de surveillance selon l'une quelconque des revendications 1 à 9, **caractérisé en ce qu'**un dispositif d'éclairage est affecté au dispositif de production d'images (136).

11. Dispositif d'usinage de pièces comprenant une tête d'usinage (128) et un dispositif de surveillance (164) selon l'une quelconque des revendications 1 à 10.

12. Dispositif d'usinage de pièces selon la revendication 11, **caractérisé en ce que** la tête d'usinage (128) comporte un porte-outil (134) sur lequel peut être placé le dispositif de production d'images (136) à la place d'un outil (166).

13. Dispositif d'usinage de pièces selon l'une quelconque des revendications 11 ou 12, **caractérisé en ce qu'**il (100) comprend un magasin d'outils (168) pour stocker plusieurs outils (166).

14. Dispositif d'usinage de pièces selon l'une quelconque des revendications 11 à 13, **caractérisé en ce qu'**il (100) comprend un dispositif de changement d'outil (170) au moyen duquel un outil (166), placé dans le porte-outil (134), peut être mécaniquement remplacé par un autre outil (166).

15. Procédé de surveillance du type, de la position et/ou de l'orientation
a) d'au moins une pièce (160) serrée, au moyen d'au moins un dispositif de serrage (156) sur un dispositif d'usinage de pièces (100) ou sur au moins un porte-pièces (150),
b) d'au moins un porte-pièces (150) sur lequel au moins une pièce (160) est maintenue, et/ou
c) d'au moins un dispositif de serrage (156) pour le serrage d'au moins une pièce (160) sur un dispositif d'usinage de pièces (100) ou sur au moins un porte-pièces (150),
**caractérisé par** les étapes suivantes :
- placement d'un dispositif de production d'images (136) sur une tête d'usinage (128) du dispositif d'usinage de pièces (100),
- production d'au moins une image théorique qui montre une pièce (160), un porte-pièces (150) et/ou un dispositif de serrage (156) d'un type théorique, dans une position théorique et/ou dans une orientation théorique au moyen d'un dispositif de production d'images (136),
- réalisation d'une analyse des images lors de laquelle au moins une image théorique de la pièce (160), du porte-pièces (150) et/ou du dispositif de serrage (156) est comparée à une image réelle, au moyen d'un dispositif d'analyse d'images,
- production d'un signal de sortie, au moyen du dispositif d'analyse d'images, pour l'activation ou le blocage d'au moins une fonction du dispositif d'usinage de pièces (100).
